# EUROPEAN PATENT APPLICATION

(11) **EP 4 206 503 A1**
(43) Date of publication of application: **05.07.2023**
(21) Application number: 21879265.3
(22) Date of filing: 29.09.2021
(51) Int. Cl.: F16K 1/38, F16K 31/06

(54) **FLOW REGULATING VALVE**

(30) Priority: 12.10.2020 CN 202011086915
(71) Applicant: Zhejiang Dunan Artificial Environment Co., Ltd., Shaoxing Zhejiang 311835 (CN)
(72) Inventor: ZHAN, Shaojun, Shaoxing, Zhejiang 311835 (CN); JIANG, Chao, Shaoxing, Zhejiang 311835 (CN)
(74) Representative: Berggren Oy
(86) International application number: PCT/CN2021/121854
(87) International publication number: WO 2022/078219

(57) **Abstract**

A flow regulating valve comprises: a valve body (10), wherein the valve body (10) has a valve port, an inner wall of the valve port has a first conical surface (11) and a second conical surface (12), an included angle between a generatrix of the first conical surface (11) and a radial plane of the valve body (10) is b, and an included angle between a generatrix of the second conical surface (12) and the radial plane of the valve body (10) is c; and a valve head (20), wherein the valve head is movably disposed in the valve body (10) to close or open the valve port, the valve head (20) has a chamfer (21), and an included angle between the chamfer (21) and the radial plane of the valve body (10) is a; where, b<a<c. Since the inner wall of the valve port of the valve body (10) has the first conical surface (11) and the second conical surface (12) with different inclination angles, and an angle of the chamfer (21) of the valve head (20) and angles of the first conical surface (11) and the second conical surface (12) satisfy the relationship b<a<c, whereby during a process of opening or closing the valve port, a flow characteristic curve is in a shape of polygonal line, thereby meeting the use requirements under some conditions.

## Description

### Technical Field

The present invention relates to the technical field of flow regulating valves, and in particular to a flow regulating valve.

### Background

In a flow regulating valve, a change of a circulation area is realized by changing a relative position between a valve head and a conical surface of a valve port, thereby realizing flow regulation. A flow characteristic curve represents a relationship between the flow of the flow regulating valve and the opening degree of the valve port (that is, a moving distance of the valve head), and an existing flow characteristic curve is in a linear relationship.

In practical use, different systems and use conditions have different requirements for flow regulation. In some cases, it is desired that the flow regulating valve will have a polygonal- shape flow characteristic curve, and an existing linear flow characteristic curve is not able to meet the invention requirements.

### SUMMARY

The present invention provides a flow regulating valve, so that the flow regulating valve has a polygonal- shape flow characteristic curve.

In order to achieve the above purpose, the present invention provides a flow regulating valve, comprising: a valve body, wherein the valve body has a valve port, an inner wall of the valve port has a first conical surface and a second conical surface, an included angle between a generatrix of the first conical surface and a radial plane of the valve body is b, and an included angle between a generatrix of the second conical surface and the radial plane of the valve body is c; and a valve head, wherein the valve head is movably disposed in the valve body to close or open the valve port, the valve head has a chamfer, and an included angle between the chamfer and the radial plane of the valve body is a; wherein, b<a<c.

By adopting this solution, since the inner wall of the valve port of the valve body has the first conical surface and the second conical surface with different inclination angles, and an angle of the chamfer of the valve head and angles of the first conical surface and the second conical surface satisfy the relationship b<a<c, in a process of opening or closing the valve port, a flow characteristic curve is in a shape of polygonal line, thereby meeting the use requirements under some conditions. Through the above arrangement, when the valve head opens or closes the valve port, a change of a circulation area between an outer wall of the valve head and the inner wall of the valve port is in a shape of polygonal line, so that the flow characteristic curve is in a shape of polygonal line.

Further, the valve body has an accommodating cavity, the valve port is communicated with the accommodating cavity, the valve head is movably disposed in the accommodating cavity, and the first conical surface is close to the accommodating cavity with respect to the second conical surface.

Further, when the valve port is in a closed state, a contact surface between the valve head and the second conical surface is a plugging surface, a distance between a transition edge of the first conical surface and the second conical surface and the plugging surface is H1, and a distance between the valve head and the plugging surface is H2; the chamfer has a first peripheral edge and a second peripheral edge along an axial direction of the valve port, and a diameter of the first peripheral edge is less than that of the second peripheral edge; when H2<H1, a minimum distance between the valve head and the inner wall of the valve port is a distance between the second peripheral edge and the second conical surface; and when H2>H1, the minimum distance between the valve head and the inner wall of the valve port is a distance between the first peripheral edge and the first conical surface. In this way, the flow jitter, even an abnormal condition that a flow is small while an opening degree is increased, which are caused by eddy current at a turning part of the valve port, are able to be avoided. The turning part of the valve port is a transition part between the first conical surface and the second conical surface.

Further, the accommodating cavity has a bottom surface, the bottom surface is connected with the first conical surface, and a distance between the bottom surface and the plugging surface is H3; when the valve port is in an open state, H2<H3. This is able to ensure that the flow is always affected by the first conical surface of the valve port, and the flow regulation is more accurate.

Further, when the valve port is in the open state, H3-H2<H2-H1. In this way, a full open position of the valve head is located at an upper-middle position of the first conical surface, and the requirement for a maximum flow in a full open state is ensured.

Further, the inner wall of the valve port also has a cylindrical surface, and the cylindrical surface of the valve port is located on a side, far away from the first conical surface, of the second conical surface.

Further, an outer wall surface of the valve head is a cylindrical surface. With the adoption of the cylindrical surface, the processing of the valve head is able to be facilitated.

Further, a side wall of the valve body is provided with a circulation port, and when the valve port is opened, the valve port is communicated with the circulation port. When the valve port is closed, the valve port and the circulation port are disconnected, and a fluid does not flow.

Further, the flow regulating valve further comprises: a guide sleeve, wherein the guide sleeve is disposed in the valve body, and the valve head is movably disposed in the guide sleeve; and a driving part, wherein the driving part is in driving connection with the valve head to drive the valve head to move. The guide sleeve is able to guide the valve head and make the valve head move smoothly. The driving part is used to drive the valve head to move back and forth. The driving part is able to be driven by electromagnetism.

Further, the flow regulating valve is an electronic expansion valve.

By applying the technical solutions of the present invention, a flow regulating valve is provided, comprising a valve body and a valve head, wherein the valve body has a valve port, an inner wall of the valve port has a first conical surface and a second conical surface, an included angle between a generatrix of the first conical surface and a radial plane of the valve body is b, and an included angle between a generatrix of the second conical surface and the radial plane of the valve body is c; and the valve head is movably disposed in the valve body to close or open the valve port, the valve head has a chamfer, and an included angle between the chamfer and the radial plane of the valve body is a; where, b<a<c. By adopting this solution, since the inner wall of the valve port has the first conical surface and the second conical surface with different inclination angles, and an angle of a chamfer of the valve head and angles of the conical surfaces are also different, in a process of opening or closing the valve port, a flow characteristic curve is in a shape of polygonal line, thereby meeting the use requirements under some conditions.

### Brief Description of the Drawings

The accompanying drawings, which are incorporated in and constitute a part of the present invention, are included to provide a further understanding of the present invention, and the description of the exemplary embodiments and illustrations of the present invention are provided to explain the present invention and are not to be construed as limiting the present invention. In the drawings:
Fig. 1 shows a schematic structural diagram of a flow regulating valve provided by an embodiment of the present invention in an open state at a valve port;
Fig. 2 shows a partial enlarged view of the flow regulating valve in Fig. 1;
Fig. 3 shows a structural schematic diagram of the flow regulating valve in Fig. 1 when the valve port is in a closed state;
Fig. 4 shows a sectional view of a partial structure of the flow regulating valve in Fig. 1;
Fig. 5 shows a schematic diagram of a flow characteristic curve of the flow regulating valve in Fig. 1.

The above drawings include the following reference numerals:
10. valve body; 11. first conical surface; 12. second conical surface; 13. accommodating cavity; 14. plugging surface; 15. bottom surface; 20. valve head; 21, chamfer; 22. first peripheral edge; 23. second peripheral edge; 30. guide sleeve; 40. driving part.

### Detailed Description of the Embodiments

The technical solutions in the embodiments of the present invention will be clearly and completely described below with reference to the drawings in the embodiments of the present invention. Apparently, the described embodiments are merely some, but not all, of the embodiments of the present invention. The following description of at least one exemplary embodiment is merely illustrative in nature and is in no way intended to limit the present invention, its invention, or uses. Based on the embodiments in the present invention, all other embodiments obtained by a person skilled in the art without involving any inventive effort are within the scope of protection of the present invention.

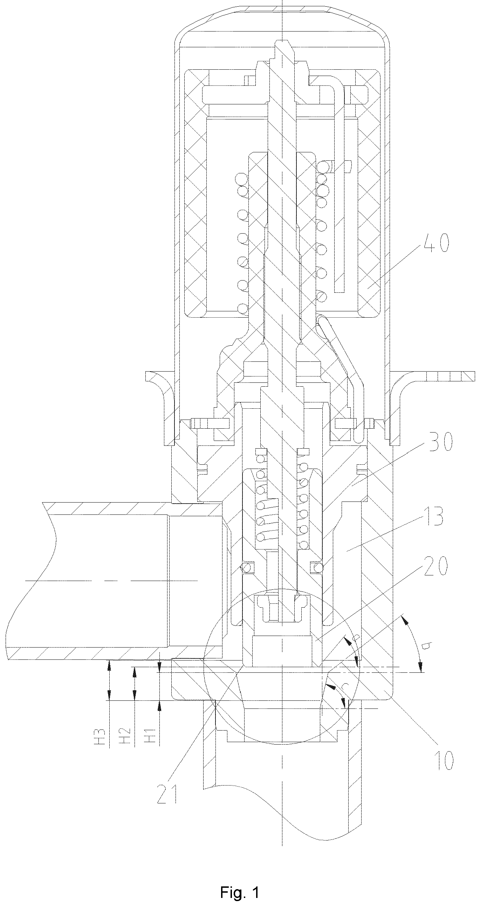

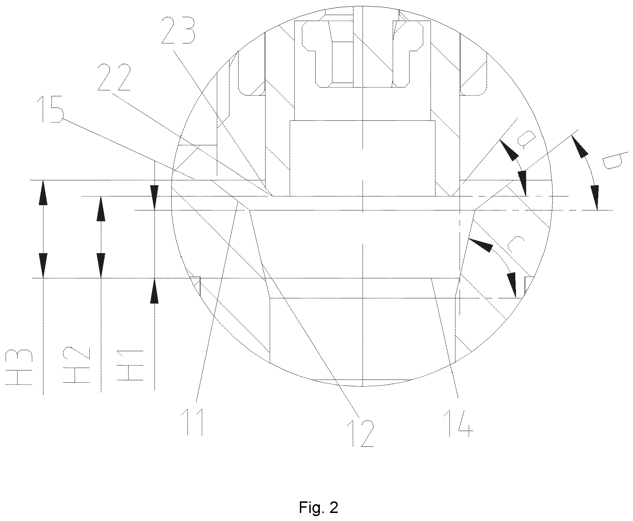

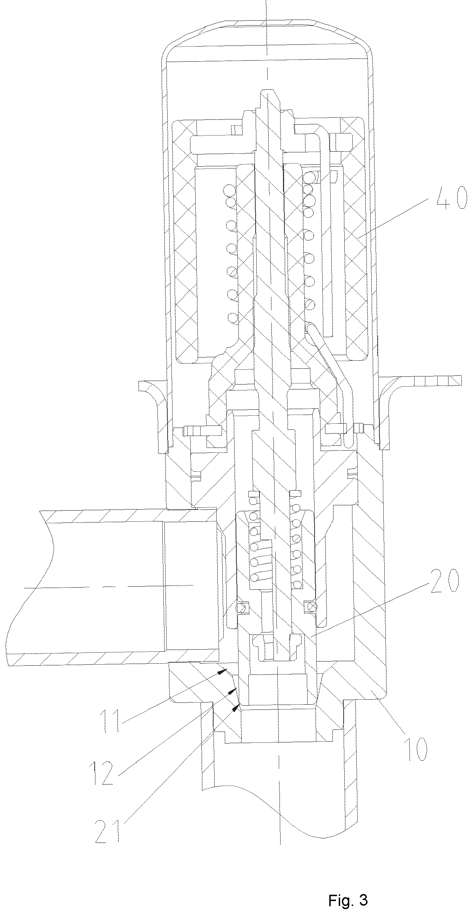

As shown in Figs. 1 to 5, an embodiment of the present invention provides a flow regulating valve, comprising: a valve body 10, wherein the valve body 10 has a valve port, an inner wall of the valve port has a first conical surface 11 and a second conical surface 12, an included angle between a generatrix of the first conical surface 11 and a radial plane of the valve body 10 is b, and an included angle between a generatrix of the second conical surface 12 and the radial plane of the valve body 10 is c; and a valve head 20, wherein the valve head is movably disposed in the valve body 10 to close or open the valve port, the valve head 20 has a chamfer 21, and an included angle between the chamfer 21 and the radial plane of the valve body 10 is a; wherein, b<a<c.

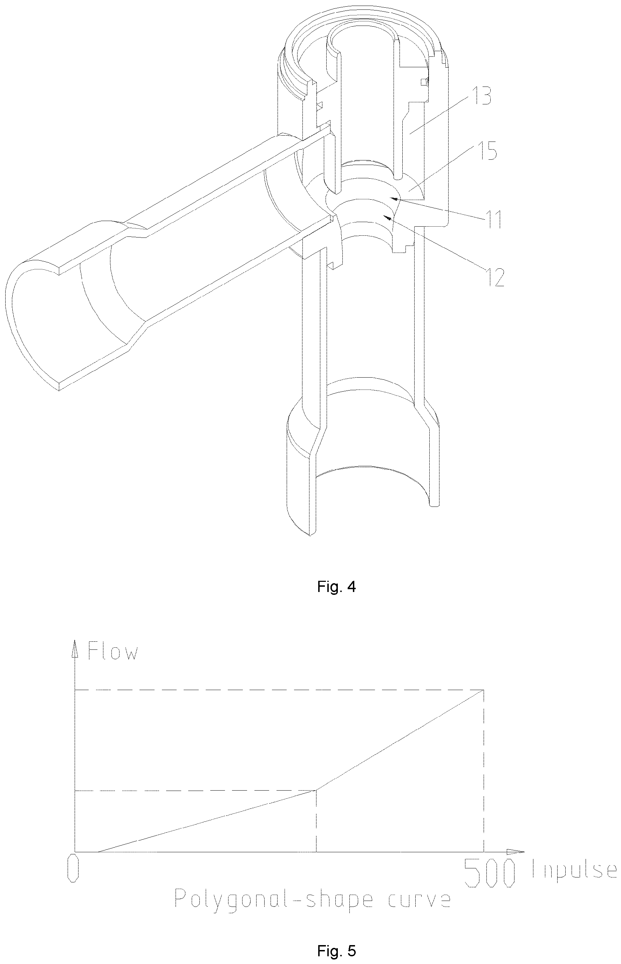

By adopting this solution, since the inner wall of the valve port of the valve body 10 has the first conical surface 11 and the second conical surface 12 with different inclination angles, and an angle of the chamfer 21 of the valve head 20 and angles of the first conical surface 11 and the second conical surface 12 satisfy the relationship b<a<c, whereby during a process of opening or closing the valve port, a flow characteristic curve is in a shape of polygonal line, thereby meeting the use requirements under some conditions. Through the above arrangement, when opens or closes the valve port by the valve head 20, a change of a circulation area between an outer wall of the valve head 20 and the inner wall of the valve port is in a shape of polygonal line, so that the flow characteristic curve is in a shape of polygonal line, as shown in Fig. 5.

In this embodiment, the valve body 10 has an accommodating cavity 13, the valve port is communicated with the accommodating cavity 13, the valve head 20 is movably disposed in the accommodating cavity 13, and the first conical surface 11 is close to the accommodating cavity 13 with respect to the second conical surface 12.

Specifically, when the valve port is in a closed state, a contact surface between the valve head 20 and the second conical surface 12 is a plugging surface 14, a distance between a transition edge of the first conical surface 11 and the second conical surface 12 and the plugging surface 14 is H1, and a distance between the valve head 20 and the plugging surface 14 is H2; the chamfer 21 has a first peripheral edge 22 and a second peripheral edge 23 along an axial direction of the valve port, and a diameter of the first peripheral edge 22 is less than that of the second peripheral edge 23; when H2<H1, a minimum distance between the valve head 20 and the inner wall of the valve port is a distance between the second peripheral edge 23 and the second conical surface 12; and when H2>H1, the minimum distance between the valve head 20 and the inner wall of the valve port is a distance between the first peripheral edge 22 and the first conical surface 11. In this way, problems that the flow jitter and even an abnormal condition that a flow is small while an opening degree is increased, caused by eddy current at a turning part of the valve port, are able to be avoided. The turning part of the valve port is a transition part between the first conical surface 11 and the second conical surface 12.

In this embodiment, the accommodating cavity 13 has a bottom surface 15, the bottom surface 15 is connected with the first conical surface 11, and a distance between the bottom surface 15 and the plugging surface 14 is H3; when the valve port is in an open state, H2<H3. It is ensured that the flow is always affected by the first conical surface 11 of the valve port, and the flow regulation is more accurate.

In an embodiment, when the valve port is in the open state, H3-H2<H2-H1. In this way, a full open position of the valve head 20 is located at an upper-middle position of the first conical surface 11, and the requirement for a maximum flow in a full open state is ensured.

In this embodiment, the inner wall of the valve port also has a cylindrical surface, and the cylindrical surface of the valve port is located on a side, far away from the first conical surface 11, of the second conical surface 12.

In an embodiment, an outer wall surface of the valve head 20 is a cylindrical surface. With the adoption of the cylindrical surface, the processing of the valve head 20 is able to be facilitated.

In this embodiment, a side wall of the valve body 10 is provided with a circulation port, and when the valve port is opened, the valve port is communicated with the circulation port, so that the fluid flows. When the valve port is closed, the valve port and the circulation port are disconnected, and a fluid does not flow.

In this embodiment, the flow regulating valve further comprises: a guide sleeve 30, wherein the guide sleeve is disposed in the valve body 10, and the valve head 20 is movably disposed in the guide sleeve 30; and a driving part 40, wherein the driving part 40 is in driving connection with the valve head 20 to drive the valve head 20 to move. The guide sleeve 30 is able to guide the valve head 20 and make the valve head 20 move steadily. The driving part 40 is used to drive the valve head 20 to move back and forth. The driving part 40 is able to be driven by electromagnetism.

Specifically, the flow regulating valve is an electronic expansion valve, but it is also able to be set as other types of flow regulating valves as required.

The above description is only an embodiment of the present invention and is not intended to limit the present invention, and various modifications and changes may be made to the present invention by those skilled in the art. Any modification, equivalent substitution, improvement, etc. made within the spirit and principle of the present invention should be included in the protection scope of the present invention.

## Claims

1. A flow regulating valve, wherein the flow regulating valve comprises:
a valve body (10), wherein the valve body (10) has a valve port, an inner wall of the valve port has a first conical surface (11) and a second conical surface (12), an included angle between a generatrix of the first conical surface (11) and a radial plane of the valve body (10) is b, and an included angle between a generatrix of the second conical surface (12) and the radial plane of the valve body (10) is c; and
a valve head (20), wherein the valve head is movably disposed in the valve body (10) to close or open the valve port, the valve head (20) has a chamfer (21), and an included angle between the chamfer (21) and the radial plane of the valve body (10) is a;
wherein, b<a<c.

2. The flow regulating valve as claimed in claim 1, wherein the valve body (10) has an accommodating cavity (13), the valve port is communicated with the accommodating cavity (13), the valve head (20) is movably disposed in the accommodating cavity (13), and the first conical surface (11) is close to the accommodating cavity (13) with respect to the second conical surface (12).

3. The flow regulating valve as claimed in claim 2, wherein the valve port is in a closed state, a contact surface between the valve head (20) and the second conical surface (12) is a plugging surface (14), a distance between a transition edge of the first conical surface (11) and the second conical surface (12) and the plugging surface (14) is H1, and a distance between the valve head (20) and the plugging surface (14) is H2;
the chamfer (21) has a first peripheral edge (22) and a second peripheral edge (23) along an axial direction of the valve port, and a diameter of the first peripheral edge (22) is less than a diameter of the second peripheral edge (23);
when H2<H 1, a minimum distance between the valve head (20) and the inner wall of the valve port is a distance between the second peripheral edge (23) and the second conical surface (12); and
when H2>H1, the minimum distance between the valve head (20) and the inner wall of the valve port is a distance between the first peripheral edge (22) and the first conical surface (11).

4. The flow regulating valve as claimed in claim 3, wherein the accommodating cavity (13) has a bottom surface (15), the bottom surface (15) is connected with the first conical surface (11), and
a distance between the bottom surface (15) and the plugging surface (14) is H3; and
when the valve port is in an open state, H2<H3.

5. The flow regulating valve as claimed in claim 4, wherein the valve port is in the open state, H3-H2<H2-H1.

6. The flow regulating valve as claimed in claim 2, wherein the inner wall of the valve port also has a cylindrical surface, and the cylindrical surface of the valve port is located on a side, far away from the first conical surface (11), of the second conical surface (12).

7. The flow regulating valve as claimed in claim 1, wherein an outer wall surface of the valve head (20) is a cylindrical surface.

8. The flow regulating valve as claimed in claim 1, wherein a side wall of the valve body (10) is provided with a circulation port, and when the valve port is opened, the valve port is communicated with the circulation port.

9. The flow regulating valve as claimed in claim 1, wherein the flow regulating valve further comprises:
a guide sleeve (30), wherein the guide sleeve is disposed in the valve body (10), and the valve head (20) is movably disposed in the guide sleeve (30); and
a driving part (40), wherein the driving part (40) is in driving connection with the valve head (20) to drive the valve head (20) to move.

10. The flow regulating valve as claimed in claim 1, wherein the flow regulating valve is an electronic expansion valve.
